# EUROPEAN PATENT APPLICATION

(11) **EP 3 996 339 A1**
(43) Date of publication of application: **11.05.2022**
(21) Application number: 19936426.6
(22) Date of filing: 04.07.2019
(51) Int. Cl.: H04L 25/00, H04L 25/03

(54) **MANOMETER**

(71) Applicant: Titan Fire System SL, 50011 Zaragoza (ES)
(72) Inventor: VILAS BLANCO, Carolina, 50011 Zaragoza (ES); GIL SANJOSÉ, Héctor, 50011 Zaragoza (ES)
(74) Representative: Vargas Vilardosa, Antonio
(86) International application number: PCT/ES2019/000050
(87) International publication number: WO 2021/001579

(57) **Abstract**

The manometer of the invention is an evolution of the EP 2687269 invention patent, of the applicant itself, in which by including a NB loT communications module (Narrow Band, Internet of things) (10), the need to have a communications switchboard as a bridge between the manometer and the server or control center is avoided. Additionally, the manometer includes a presence and distance sensor (15) that allows to remotely monitor that the installation associated to the manometer complies with the safety regulations related to the accessibility that such installation must have, generating an alarm signal when the same may be blocked by any element.

## Description

### THE SECTOR OF THE TECHNOLOGY

The present invention relates to a control manometer, applicable in very diverse fields, such as for example in fire protection, applicable in fire extinguishers, hoses, pressure groups, sprinklers, pipes and the like.

The purpose of the invention is to provide a manometer capable of wirelessly communicating different types of alarm signals, such as motion detection, loss of safety ring, pressure changes+presence sensor (detecting if there is an obstacle), without the need to report it to any switchboard, so that the events monitored by the manometer are sent directly to the cloud.

Although the fundamental scope of the present invention is fire protection, it is equally applicable in other fields where similar performance is required, such as in the field of air conditioning, supply networks of different types of fluids, health sector, etc.

### BACKGROUND OF THE INVENTION

In the field of practical application of the invention, the applicant itself is the holder of the invention patent EP 2687269, which describes firefighting equipment with remote monitoring means, involving a series of wireless manometers, which send the recorded information to a switchboard, which is responsible for communicating it to the cloud through various interfaces (Wi-Fi, 3G or Ethernet).

The fact of needing this switchboard makes the installations more expensive, entailing additional costs that are clearly undesirable.

At the same time, it should be noted that current regulations establish that the extinguishing elements must not be obstructed so that they can be used if needed.

Until now, these checks have been made visually, so that to date there have been no means of monitoring this variable remotely.

### EXPLANATION OF THE INVENTION

The control manometer in fire protection recommended here solves the above-mentioned problem in a fully satisfactory manner, on the basis of a simple but effective solution.

To this end, the manometer of the invention constitutes an evolution to the manometers provided for in the invention patent EP 2687269, by being able to communicate different types of alarm signals wirelessly, without the need to report it to any switchboard, so that the events controlled by the manometer are sent directly to the cloud, offering additional features, such as being able to warn if an extinguishing element has easy access.

More specifically, and based on the conventional structure of this type of manometers, it has been foreseen that the manometer of the invention also includes a NB loT (Narrow Band, Internet of things) communications module, a presence and distance sensor, as well as an NFC antenna, including, as mentioned, the usual accelerometer, pressure sensor, tamper sensor in the case of being intended to be implanted in a fire extinguisher, as well as LEDs indicating events.

As previously stated, the manometer of the invention is not only applicable to fire protection, but could be used in the healthcare sector to monitor cylinder changeover without requiring visual inspection by configuring the manometer to warn when a preset discharge zone is reached.

Similarly, it could be used in air conditioning and boilers, to measure and control all pressures in real time, avoiding breakdowns, supply cuts, or explosions due to working at incorrect pressures, as well as for the control of conduction installations of very diverse types of fluids, such as water, gas, fuel, etc.

In this way, a completely autonomous manometer is achieved, which does not require any additional means to communicate with the outside.

### DESCRIPTION OF THE DRAWINGS

To complement the description that will be made below and in order to provide a better understanding of the characteristics of the invention, according to a preferential example of its practical realization, a plan is attached as an integral part of that description, where, in an illustrative but not limitative manner, the following has been shown:

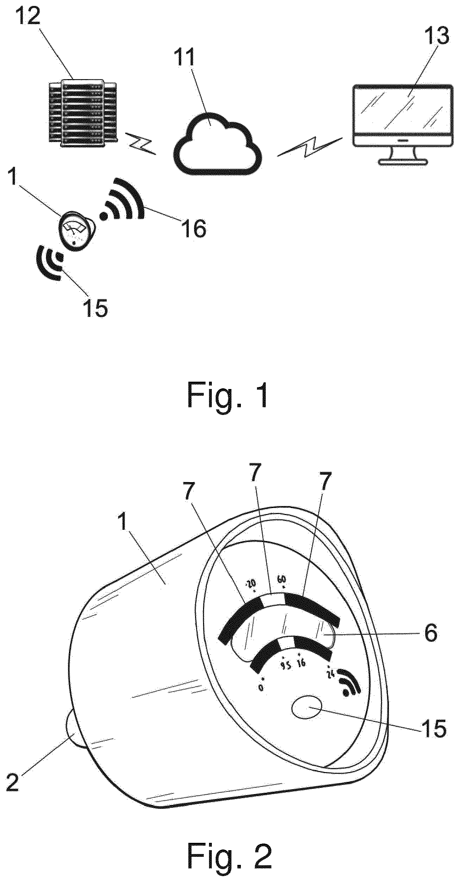

Figure 1.- Shows a schematic view of the form of direct communication with the cloud that presents a control manometer in the fire protection carried out in accordance with the purpose of this invention.
Figure 2.- Shows a perspective view of the external appearance that the manometer could have.

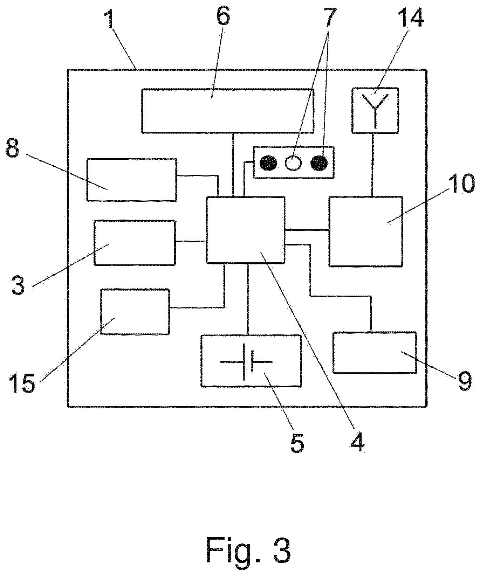

Figure 3.- Finally, it shows a diagram of functional blocks of the manometer of the invention.

### PREFERRED EXECUTION OF THE INVENTION

In view of the figures shown above, it can be seen that the manometer of the invention consists of a casing (1), with a connection element (2) to the piping or element whose pressure is to be controlled, which will be associated with a pressure sensor (3) connected to a control circuit (4), powered by one or more batteries (5), associated to a display (6), as well as to diodes (7) status indicators, activatable according to the pre-programmed pressure levels, and may include an accelerometer (8), as well as an anti-tampering sensor (9), for example associated to the ring of a fire extinguisher, when the device is implanted in such a safety element.

Therefore, in accordance with the essence of the invention, it is foreseen that the device includes a communications module (10) NB loT (Narrow Band, Internet of things), or other loT protocols such as Sigfox or LoRa, through which to communicate (16) directly with the cloud (11) to which the corresponding server (12) of the company in charge of security will have access, as well as the computer equipment (13) of control of the installation itself.

The device also has an NFC antenna (14), in order to be reprogrammed wirelessly by authorized personnel.

Similarly, and in accordance with another of the main features of the invention, it is foreseen that the device has a presence and distance sensor (15) by means of which it can be ensured that there is no obstacle in the vicinity of the manometer, in order to ensure that the safety element to which the manometer is associated is perfectly accessible, or otherwise automatically warn the control personnel that it is necessary to unblock said area.

In this way, a completely autonomous manometer is achieved, which does not require any additional means to communicate with the outside.

## Claims

1. Manometer, being of the type consisting of a housing (1), with a connection element (2) to the pipeline or element whose pressure is to be controlled, which has a pressure sensor (3) connected to a control circuit (4), powered by one or more batteries (5), associated with a display (6), **characterized in that** it includes a NB loT (Narrow Band, Internet of things) communications module (10) or other loT protocols such as Sigfox or LoRa, for direct communication with the cloud (11), the device being provided with a presence and distance sensor (15).

2. 2⁵.- Manometer, according to claim 1^{§}, characterized because it includes an NFC antenna (14).

3. 3⁵.- Manometer, according to claim 1^{§}, characterized because it includes diodes (7) status indicators.

4. 4^{5.-}.- Manometer, according to claim 1^{§}, characterized because it includes an accelerometer (8).

5. 5⁵.- Manometer, according to claim 1^{§}, characterized because it includes an anti-handling sensor (9).
